# EUROPÄISCHE PATENTSCHRIFT

(11) **EP 0 900 733 B1**
(45) Veröffentlichungstag und Bekanntmachung des Hinweises auf die Patenterteilung: **28.04.2004**
(21) Anmeldenummer: 98202750.0
(22) Anmeldetag: 17.08.1998
(51) Int. Cl.: B65B 51/04, A22C 11/12

(54) **Verfahren und Vorrichtung zum Schliessen von Verschlussklammern**
Method and apparatus for closing sealing clips
Procédé et appareil pour fermer des agrafes de fermeture

(30) Priorität: 02.09.1997 DE 19738298
(43) Veröffentlichungstag der Anmeldung: 10.03.1999
(73) Patentinhaber: Poly-clip System GmbH & Co. KG, 60489 Frankfurt am Main (DE)
(72) Erfinder: Bienert, Olaf, 65529 Waldems (DE); Ebert, Detlef, 61231 Bad Nauheim (DE); Gerheim, Manfred, 65760 Eschborn (DE)
(74) Vertreter: Eisenführ, Speiser & Partner

(56) Entgegenhaltungen:
- EP-A- 0 283 063
- EP-A- 0 399 195
- DE-U- 1 933 066
- DE-U- 9 415 379

## Beschreibung

Die Erfindung betrifft ein Verfahren zum Einrichten einer Maschine für das Verschließen von Verschlußklammern zwischen einem Stempel und einer Matrize, welche zum Verschließen der Klammer zunächst bis auf einen einstellbaren Verschlußabstand aufeinander zu und anschließend voneinander weg bewegt werden. Die Erfindung betrifft ebenfalls eine Vorrichtung zum Verschließen von Verschlußklammern zwischen einem Stempel und einer Matrize.

Ein Einsatzgebiet für Verfahren der eingangs genannten Art und die entsprechende Vorrichtung ist das Verschließen von beutel-oderschlauchförmigen Verpackungen, wie es beispielsweise die Müllen von Würsten sind. Diese werden häufig mit U-förmigen Aluminium-Verschlußklammern verschlossen. An die Qualität eines solchen Verschlusses werden hohe Anforderungen gestellt. Er darf nicht so fest sein, daß die Verpakkungshülle beim Verschließen beschädigt wird. Gleichzeitig muß der Verschluß aber ausreichend dicht sein und darf bei Behandlungsschritten, die auf das Verschließen einer Wurst folgen, nicht von dieser abrutschen. Diese hohen Anforderungen an den Verschluß machen es erforderlich, daß das Maß, auf das die Klammer nach Abschluß des Verschließvorganges zusammengedrückt wird - im folgenden Klammerhöhe genannt - für den jeweiligen Verpackungstyp durch Einstellen eines entsprechenden Verschlußabstandes genau erreicht wird. Dies geschieht zunächst empirisch. Sind die entsprechenden Parameter für einen Produkttyp einmal bestimmt, können sie an der Verschließmaschine eingestellt werden. Die auf dem Markt befindlichen Verschließmaschinen bieten in der Regel die Möglichkeit, den gewünschten Verschlußabstand einzustellen. Meistens ist auch eine Skala vorgesehen, die es ermöglicht, den gleichen Wert für die Klammerhöhe zu einem späteren Zeitpunkt wieder einzustellen. Eine derartige Verschließmaschine ist in Form eines Tischgeräts aus dem DE-U-19 33 066 bekannt.

Ist die Verschließmaschine auf das entsprechende Produkt eingestellt, gestaltet sich der Verschließvorgang wie folgt:

Zunächst wird ein Abschnitt einer Schlauchhülle mit dem Füllgut - beispielsweise Wurstbrät - befüllt. Anschließend wird die befüllte Schlauchhülle von zwei Verdrängerscherenpaaren eingeschnürt. Diese bewegen sich dann axial zur Wurstachse voneinander weg und bilden so einen brätfreien Darmzopf, der sich zwischen dem Stempel und der Matrize der Verschließmaschine befindet. In die Matrize ist eine offene Verschlußklammer eingesetzt. Zum Verschließen der Verschlußklammer werden Stempel und Matrize aufeinander zu bewegt, so daß der brätfreie Darmzopf von der offenen Verschlußklammer erfaßt wird. Anschließend trifft der Stempel auf die freien Schenkel der U-förmigen Verschlußklammer und biegt diese um den Darmzopf. Zum Verschließen des Darmzopfes bewegen sich Stempel und Matrize somit zunächst aufeinander zu, verschließen dabei die Verschlußklammer und bewegen sich anschließend wieder voneinander weg, um die Verschlußklammer freizugeben. Im Umkehrpunkt ihrer Bewegung haben Stempel und Matrize einen Verschlußabstand voneinander, derfür die resultierende Klammerhöhe maßgebend ist. Die Klammerhöhe einer verschlossenen Verschlußklammer ergibt sich somit aus dem tatsächlichem Verschlußabstand von Stempel und Matrize im Umkehrpunkt zwischen ihrer Bewegung aufeinander zu und voneinander weg.

Da das Hebelsystem, mit dem Stempel und Matrize bewegt werden, beim Verschließvorgang Kräfte bis zu 2000 kg aufbringt, ist zwangsläufig mit einem gewissen Verschleiß zu rechnen. Das dadurch entstehende Spiel bleibt beim Einstellen des Verschlußabstandes mit Hilfe der Skala an der Verschließmaschine unberücksichtigt. Die Folge ist, daß der Skalenwert nicht dem tatsächlichen Verschlußabstand und damit auch nicht der tatsächlich resultierenden Klammerhöhe entspricht. Die tatsächlich resultierende Klammerhöhe ist somit nicht die ursprünglich ermittelte Sollklammerhöhe, für die der Verschlußabstand auf der Skala eingestellt ist. Auch in der laufenden Produktion führt Spiel des Hebelsystems durch Verschleiß dazu, daß der Verschlußabstand von Stempel und Matrize ständig zunimmt, so daß die Verschlußklammem immer weniger fest verschlossen werden und zum Beispiel bei einer nachfolgenden Behandlung einer Wurst abrutschen können.

Die Betreiber solcher Verschließmaschinen sind somit heutzutage gezwungen, bei jedem Produktionsbeginn immer wieder die Festigkeit des Verschlusses zu prüfen und gegebenenfalls zu korrigieren. Die Prüfmethoden sind aber sehr individuell und von dem Prüfenden abhängig und damit auch sehr subjektiv. Sehr häufig wird die erforderliche Verschlußklammerhöhe aus Sicherheitsgründen unterschritten, d.h. die Verschlußklammern werden zu fest verschlossen. Dadurch wird die Verschließmaschine mechanisch weit höher beansprucht, als eigentlich erforderlich, was zu erhöhtem Verschleiß und damit zum frühen Ausfall der Maschine führt.

Aufgabe der Erfindung ist es, die Überwachung des Verschlussabstandes von subjektiven Einflüssen unabhängig zu machen. Gelöst wird diese Aufgabe durch ein Verfahren der eingangs genannten Art, bei dem zur Bestimmung des Verschlußabstandes der Abstand zwischen einem dem Stempel oder der Matrize ortsfest zugeordneten Distanzsensor und einer dem jeweils anderen Teil (Matrize oder Stempel) ortsfest zugeordneten Referenzfläche gemessen wird. Diese Messung geschieht vorzugsweise berührungslos, um mechanischen Verschleiß und unnötige Geräuschbildung zu vermeiden.

Der Kerngedanke der Erfindung gemäß den Ansprüchen 1 und 5 besteht darin, die sich im Betrieb aufgrund von Lagerverschleiß etc. tatsächlich einstellende Verschlußklammerhöhe zu erfassen. Im Sinne der Erfindung geschieht dies vorteilhaft durch Messen des Verschlußabstandes zwischen Stempel und Matrize. Dem liegt die Erkenntnis zugrunde, daß letztendlich der Verschlußabstand von Stempel und Matrize entscheidend für die Qualität des Verschlusses ist. Durch unmittelbares Messen des Verschlußabstandes werden einerseits alle Einflüsse miterfaßt, die den Verschlußabstand mitbestimmen, während andererseits das Meßergebnis verfälschende Einflüsse vermieden werden.

Es ist auch denkbar, den Verschlußabstand mittelbar zu messen bzw. zu verändem, indem die maximale Verschließkraft sensorisch erfaßt wird, wie diese die EP 0 467 020 A1 vorschlägt. Diese Variante birgt aber den Nachteil, daß in die Messung auch die beim Schließen der Klammer auftretenden Reibungskräfte und der Verformungswiderstand der Verschlußklammer eingehen. Die Reibungskräfte würden sich beispielsweise verändern, wenn statt trockener fettige Verschlußklammem benutzt werden.

Ein weiterer Vorteil des erfindungsgemäßen Verfahrens ist, daß die Verschließmaschine automatisch abgeschaltet werden kann, wenn sich keine oder zwei Verschlußklammem zwischen Stempel und Matrize befinden. In solchen Fällen wird nämlich die erforderliche Klammerhöhe bei richtig eingestellter Maschine entweder gar nicht erreicht oder aber überschritten.

Der Verschlußabstand wird nachgestellt, wenn der gemessene Verschlußabstand außerhalb eines Sollwertbereichs für den Verschlußabstand liegt. Dies geschieht vorzugsweise automatisch. Es ergibt sich dann ein geschlossener Regelkreis für die Überwachung der Verschlußklammerhöhe während des Betriebs, mit dessen Hilfe teure Produktionsausfälle wegen fehlerhaft verschlossener Verpackungen oder unerwünschte Unterbrechungen zum Nachstellen der Verschlußklammerhöhe unterbunden werden können.

Das Einstellen des Verschlußabstandes zwischen Stempel und Matrize erfolgt beispielsweise, wie aus dem DE-GM 19 33 066 bekannt, durch Verändern der Geometrie des Stempelantriebs. Dies läßt sich besonders einfach dadurch bewerkstelligen, daß der Verschlußabstand durch das Verändern der Länge einer Hubstange im Antrieb für den Stempel eingestellt wird.

Die erfindungsgemäße Lösung der Aufgabe besteht auch in einer Vorrichtung der eingangs genannten Art, welche einen bezüglich der Matrize oder des Stempels ortsfest angeordneten Sensor aufweist, der zum Erfassen des Verschlußabstandes (X) mit einer ortsfest am jeweils anderen Teil angeordneten Referenzfläche korrespondiert, sowie eine Einrichtung zum Verstellen des verschlussabstandes zwischen dem Stempel und der Matrize. Eine solche Vorrichtung ermöglicht es, die Verschlußklammerhöhe unter Umgehung aller möglichen Verschleißstellen zu bestimmen und erschließt dem Anwender damit sämtliche Vorzüge des erfindungsgemäßen Verfahrens. Der Sensor ist dabei vorzugsweise ein berührungslos arbeitender Distanzsensor. Auf diese Weise ergibt sich ein besonders einfacher und wenig störanfälliger Aufbau.

Eine bevorzugte Ausführungsform der Vorrichtung besitzt einen Antrieb für den Stempel, der eine längenverstellbare Hubstange aufweist. Über diese längenverstellbare Hubstange läßt sich die Klammerhöhe einstellen. Die Hubstange kann beispielsweise Bestandteil eines Hebel-Getriebes sein, welches von einer Kurvenscheibe angetrieben wird und mit dieser zusammen den Antrieb für Stempel und/oder Matrize bildet. Durch die Form der Kurvenscheibe kann der Bewegungslauf für den Stempel und/oder die Matrize vorgegeben werden.

Die Hubstange ist vorzugsweise mit einem motorgetriebenen Stellantrieb für die Stangenlänge ausgerüstet. Der Stellantrieb ermöglicht es, die Stangenlänge automatisch zu verstellen. Wenn dann - wie bevorzugt - der Distanzsensor und der Stellantrieb über eine Regeleinheit miteinander verbunden sind, ergibt sich ein geschlossener Regelkreis zum Überwachen der Klammerhöhe.

Die Erfindung und ihre Varianten sollen nun anhand von Beispielen erläutert werden. Der Erläuterung dient auch die Zeichnung, deren
Figur 1 ein vereinfachtes Verschlußsystem einer Wurstverschließmaschine zeigt und deren
Figur 2 in einem vergrößerten Ausschnitt des Verschlußsystems aus Fig. 1 ein Ausführungsbeispiel mit geschlossenem Verschlußwerkzeug und einem Sensor für die Verschlußklammer-Höhenabtastung zeigt.

Das Verschließsystem 10 einer Verschließmaschine weist einen oberen Verschließhebel 12 und einen unteren Verschließhebel 14 auf. Beide Verschließhebel sind um einen gemeinsamen Drehpunkt 16 schwenkbar. Die Schwenkbewegung der Verschließhebel 12 und 14 wird von einer nicht gezeigten Kurvenscheibe hervorgerufen und über Hubstangen 18 und 20, die an Anlenkungen 22 bzw. 24 an den Verschließhebeln 12, 14 angreifen, auf diese übertragen. Am oberen Verschließhebel 12 ist ein Stempel 26 befestigt und am unteren Verschließhebel 14 eine Matrize 28. In die Matrize 28 ist eine offene Verschlußklammer 30 eingesetzt. Zwischen dem Stempel 26 und der Matrize 28 mit der offenen Verschlußklammer 30 befindet sich ein zu verschließender Darmzopf 32.

Um diesen zu verschließen, werden Stempel 26 und Matrize 28 durch eine entsprechende Schwenkbewegung der Verschließhebel 12 und 14 aufeinander zu bewegt, so daß der Darmzopf 32 von der offenen Verschlußklammer 30 erfaßt wird. Anschließend trifft der Stempel auf die freien Schenkel der U-förmigen Verschlußklammer und biegt diese um den Darmzopf 32. Nach dem Schließen der Verschlußklammer 30 werden Stempel 26 und Matrize 28 wieder voneinander weg bewegt, um den mit der Verschlußklammer verschlossenen Darmzopf 32 freizugeben. Im Umkehrpunkt ihrer Bewegung haben Stempel 26 und Matrize 28 den geringsten Abstand voneinander, bei dem die Verschlußklammer ganz auf die gewünschte Klammerhöhe zusammengedrückt ist.

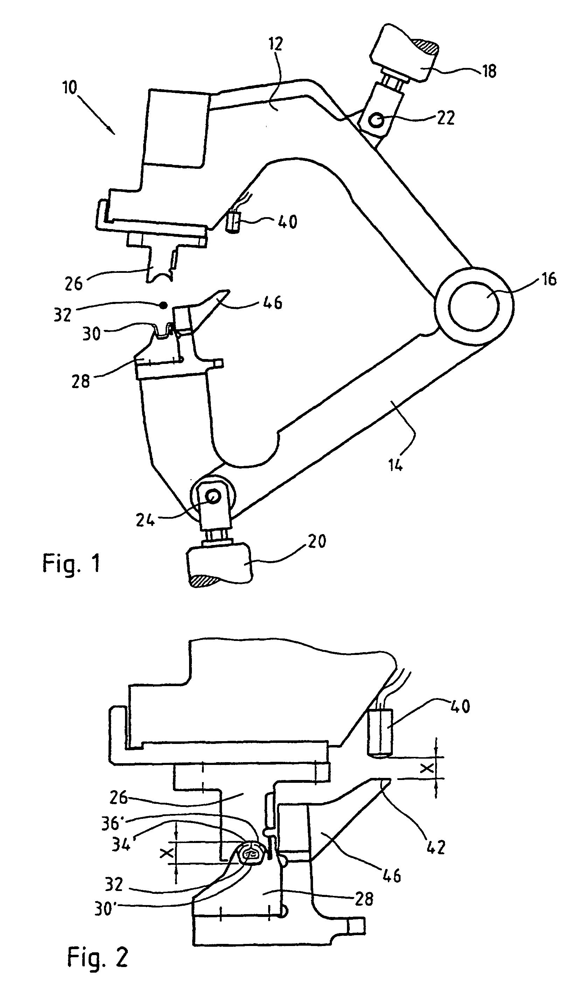

Dieser Zustand ist in Figur 2 abgebildet. Stempel 26 und Matrize 28 haben einen Verschlußabstand voneinander - in der Fig. 2 mit "X" bezeichnet -, der gleichzeitig der Klammerhöhe entspricht. Die Verschlußklammer 30' ist so verformt, daß sich ihre freien Schenkel 34' und 36' berühren und den Darmzopf 32 sicher umschließen. Außerdem ist die Verschlußklammer 30' auf die gewünschte Klammerhöhe "X" zusammengestaucht.

Eingestellt wird die Klammerhöhe "X" durch Verändern der Länge der Hubstange 18. Zum wiederholten Einstellen der Hubstangenlänge und damit der Klammerhöhe "X" auf einen bestimmten Wert ist an der Verschließmaschine eine in den Figuren nicht dargestellte Skala vorgesehen. Bei der Einstellung der Klammerhöhe "X" mit Hilfe dieser Skala bleibt das sich zwangsläufig einstellende Spiel beispielsweise in den Anlenkungen 22 und 24 sowie in dem Drehpunkt 16 notwendigerweise unberücksichtigt. Um dennoch eine exakte Klammerhöheneinstellung vornehmen zu können, ist an dem oberen Schwenkhebel 12 ortsfest zum Stempel 26 ein Distanzsensor 40 angebracht. Dieser mißt berührungslos den Abstand zu einer Referenzfläche 42 am unteren Schwenkhebel 14. Die Referenzfläche 42 ist ortsfest bezüglich der Matrize 28. Die Referenzfläche 42 ist Teil einer Bedämpfungsplatte 46, die derart in den vom Sensor 40 erfaßten Raum ragt, daß dieser möglichst genaue Distanzwerte liefert. Entsprechend ist auch die Form der Bedämpfungsplatte 46 gewählt. Bei berührungslos arbeitenden Sensoren, die auf die Annäherung von Metallteilen reagieren, besteht die Bedämpfungsplatte 46 bevorzugt aus Metall.

Anstelle der beschriebenen und in der Zeichnung dargestellten Sensoranordnung könnte das Verschließsystem auch einen Kraftsensor zum Erfassen der Verschließkraft aufweisen, da diese mit kleiner werdender Klammerhöhe "X" größer wird. Die Verschließkraft hängt aber nicht ausschließlich von der Klammerhöhe "X" ab, sondern beispielsweise auch von den Gleit- und Verformungseigenschaften der Verschlußklammer. Diese wiederum hängen bei an sich gleichem Verschlußklammertyp auch davon ab, ob die Verschlußklammern trocken oder aus irgendwelchen Gründen fettig sind, so daß das Messen der Verschließkraft keinen eindeutigen Rückschluß auf die Klammerhöhe zuläßt. Das Messen des Verschlußabstandes zwischen Stempel 26 und Matrize 28 erscheint daher geeigneter, um die tatsächliche Verschlußklammerhöhe "X" zu bestimmen. Gleichwohl kann ein Sensor zum Erfassen der Verschließkraft zusätzlich vorgesehen werden, um beispielsweise Abweichungen der Ist-Klammerhöhe von der Soll-Klammerhöhe, die durch den Verschleiß in den Gelenken des Antriebs hervorgerufen werden, von solchen zu unterscheiden, die sich daraus ergeben, daß in die Matrize 28 möglicherweise keine Verschlußklammer 30 oder aber sogar derer zwei eingesetzt sind.

Anstelle des beschriebenen und in der Zeichnung dargestellten berührungslos arbeitenden Distanzsensors kann aber auch ein hydraulisch arbeitender Distanzsensor eingesetzt werden. In diesem Falle ist an dem oberen Verschließhebel 12 ein Zylinder befestigt, in dem sich ein Kolben mit einer Kolbenstange befindet, die aus dem Zylinder herausragt und von einer Referenzfläche am unteren Verschließhebel 14 in den Zylinder hineingedrückt werden kann. Der Zylinderraum über dem Kolben ist mit einer Flüssigkeit gefüllt, die beim Eindrücken der Kolbenstange in ein Meßrohr gedrückt wird. Das Meßrohr ist mit einer Skala versehen, die die Klammerhöhe anzeigt. Bei solch einem hydraulischen Meßsystem besteht allerdings der Nachteil, daß sich der Nullpunkt für die Messung durch Ausdehnung der Flüssigkeitssäule verändert und daher vor jeder Messung neu einjustiert werden muß. Hinzu kommt, daß sich die Hebel beim Verschließvorgang mit einer Geschwindigkeit von ca. 2 m/sec. aufeinander zu bewegen, so daß ein Aufschlagen auf ein Meßgerät zu Zerstörungen oder Lärmbelästigung führen kann. Daher wird das eingangs beschriebene berührungslose Meßsystem bevorzugt.

Das in den Fig. 1 und 2 dargestellte Verschließsystem 10 kann außerdem dahingehend ergänzt werden, daß die Hubstange 18 mit einem motorgetriebenen Stellantrieb (nicht dargestellt) ausgestattet wird. Angesteuert wird dieser Stellantrieb von einer ebenfalls nicht dargestellten Regeleinheit, in welcher die von dem Sensor 40 ermittelten Werte für die Ist-Klammerhöhe "X" mit gewünschten Sollwerten verglichen werden. Durch die Regeleinheit und den Stellantrieb kann die Klammerhöhe "X" bei Regelabweichungen automatisch nachgestellt werden. Dieses Regelsystem kann um den bereits beschriebenen Kraftsensor zum Erfassen der Verschließkraft ergänzt werden. Es ergibt sich in jedem Falle ein Verschließsystem, mit dem eine hohe Verschlußqualität bei geringer Störanfälligkeit erzielt wird.

## Patentansprüche

1. Verfahren zum Einrichten einer Maschine für das Schließen von Verschlußklammern zwischen einem Stempel (26) und einer Matrize (28), welche zum Verschließen der Klammer (30) zunächst bis auf einen einstellbaren Verschlußabstand (X) aufeinander zu und anschließend voneinander weg bewegt werden,
**dadurch gekennzeichnet, daß** zur Bestimmung des Verschlußabstandes (X) der Abstand zwischen einem dem Stempel (26) oder der Matrize (28) ortsfest zugeordneten Distanzsensor (40) und einer dem jeweils anderen Teil (Matrize 28 oder Stempel 26) ortsfest zugeordneten Referenzfläche (42) gemessen wird.

2. Verfahren nach Anspruch 1,
**dadurch gekennzeichnet, daß** der Abstand berührungslos gemessen wird.

3. Verfahren nach Anspruch 1 oder 2,
**dadurch gekennzeichnent,** daß der Verschlußabstand (X) mittels eines Stellantriebs automatisch nachgestellt wird, wenn der gemessene Verschlußabstand (X) außerhalb eines Sollwertbereiches für den Verschlußabstand liegt.

4. Verfahren nach Anspruch 3, ,
**dadurch gekennzeichnet, daß** der Verschlußabstand (X) durch das Verändern der Länge einer Hubstange (18) im Antrieb für den Stempel (26) eingestellt wird.

5. Vorrichtung zum Schließen von Verschlußklammern zwischen einem Stempel (26) und einer Matrize (28), mit einer Einrichtung zum Verstellen des Verschlußabstandes zwischen dem Stempel und der Matrize,
**gekennzeichnet durch** einen bezüglich der Matrize (28) oder des Stempels (26) ortsfest angeordneten Distanzsensor (40), der zum Erfassen des Verschlußabstandes (X) mit einer ortsfest am jeweils anderen Teil angeordneten Referenzfläche (42) korrespondiert.

6. Vorrichtung nach Anspruch 5,
**dadurch gekennzeichnet, daß** der Sensor (40) ein berührungslos arbeitender Distanzsensor ist.

7. Vorrichtung nach Anspruch 5 oder 6, mit einem Antrieb für den Stempel (26),
**dadurch gekennzeichnet, daß** der Antrieb eine längenverstellbare Hubstange (18) aufweist.

8. Vorrichtung nach Anspruch 7,
**dadurch gekennzeichnet, daß** die Hubstange (18) mit einem motorgetriebenen Stellantrieb für die Stangenlänge ausgerüstet ist.

9. Vorrichtung nach Anspruch 8,
**dadurch gekennzeichnet, daß** der Distanzsensor (40) und der Stellantrieb über eine Regeleinheit miteinander verbunden sind.

## Claims

1. A method of setting up a machine for closing closure clips between a stamp (26) and a female tool (28) which to close the clip (30) are initially moved towards each other to an adjustable closure spacing (X) and are then moved away from each other, **characterised in that** to determine the closure spacing (X) the spacing between a distance sensor (40) stationarily associated with the stamp (26) or the female tool (28) and a reference surface (42) stationarily associated with the respective other part (stamp 26 or female tool 28) is measured.

2. A method according to claim 1 **characterised in that** the spacing is measured contactlessly.

3. A method according to claim 1 or claim 2 **characterised in that** the closure spacing (X) is automatically re-adjusted by means an adjusting drive if the measured closure spacing (X) is outside a reference value range for the closure spacing.

4. A method according to claim 3 **characterised in that** the closure spacing (X) is adjusted by the variation in the length of a stroke rod (18) in the drive for the stamp (26).

5. Apparatus for closing closure clips between a stamp (26) and a female tool (28) comprising a device for adjusting the closure spacing between the stamp and the female tool **characterised by** a distance sensor (40) which is arranged stationarily with respect to the female tool (28) or the stamp (26) and which to detect the closure spacing (X) corresponds to a reference surface (42) arranged stationarily at the respective other part.

6. Apparatus according to claim 5 **characterised in that** the sensor (40) is a contactlessly operative distance sensor.

7. Apparatus according to claim 5 or claim 6 comprising a drive for the stamp (26) **characterised in that** the drive has an adjustable-length stroke rod (18).

8. Apparatus according to claim 7 **characterised in that** the stroke rod (18) is provided with a motor-driven adjusting drive for the rod length.

9. Apparatus according to claim 8 **characterised in that** the spacer sensor (40) and the adjusting drive are connected together by way of a regulating unit.

## Revendications

1. Procédé pour aménager une machine pour fermer des agrafes de fermeture entre un poinçon (26) et une matrice (28) qui, pour fermer l'agrafe (30), sont déplacés en premier lieu l'un vers l'autre jusqu'à une distance de fermeture réglable (X) et sont ensuite éloignés l'un de l'autre, **caractérisé en ce que**, pour déterminer la distance de fermeture (X), on mesure la distance entre un capteur de distance (40) associé de manière stationnaire au poinçon 26 ou à la matrice (28) et une surface de référence (42) associée de manière stationnaire à respectivement l'autre partie (matrice (28) ou poinçon (26)).

2. Procédé selon la revendication 1, **caractérisé en ce que** la distance est mesurée sans contact.

3. Procédé selon la revendication 1 ou 2, **caractérisé en ce que** la distance de fermeture (X) est rajustée automatiquement à l'aide d'un mécanisme d'ajustement lorsque la distance de fermeture mesurée (X) se situe en dehors d'une zone de valeur de consigne pour la distance de fermeture.

4. Procédé selon la revendication 3, **caractérisé en ce que** la distance de fermeture (X) est ajustée par la modification de la longueur d'une tige de levée (18) dans le mécanisme d'entraînement pour le poinçon (26).

5. Dispositif pour fermer des agrafes de fermeture entre un poinçon (26) et une matrice (28), avec un dispositif pour régler la distance de fermeture entre le poinçon et la matrice, **caractérisé par** un capteur de distance (40) associé de manière stationnaire à la matrice (28) ou au poinçon (26) qui, pour détecter la distance de fermeture (X), correspond à une surface de référence (42) disposée de manière stationnaire sur respectivement l'autre partie.

6. Dispositif selon la revendication 5, **caractérisé en ce que** le capteur (40) est un capteur de distance fonctionnant sans contact.

7. Dispositif selon la revendication 5 ou 6, avec un mécanisme d'entraînement pour le poinçon (26), **caractérisé en ce que** le mécanisme d'entraînement comprend une tige de levée réglable en longueur (18).

8. Dispositif selon la revendication 7, **caractérisé en ce que** la tige de levée (18) est équipée d'un mécanisme d'ajustement de la longueur de la tige entraîné par un moteur.

9. Dispositif selon la revendication 8, **caractérisé en ce que** le capteur de distance (40) et le mécanisme d'ajustement sont reliés ensemble par l'intermédiaire d'une unité de régulation.
